# EUROPEAN PATENT APPLICATION

(11) **EP 1 652 831 A1**
(43) Date of publication of application: **03.05.2006**
(21) Application number: 05755748.0
(22) Date of filing: 24.06.2005
(51) Int. Cl.: C04B 38/00, C04B 35/565, B01D 39/20

(54) **PROCESS FOR PRODUCING POROUS BODY, POROUS BODY, AND HONEYCOMB STRUCTURAL BODY**

(30) Priority: 25.06.2004 JP 2004188856
(71) Applicant: Ibiden Co.,Ltd., Oogaki City 503-8604 (JP)
(72) Inventor: OHNO, Kazushige;, ata, Ibigawa-cho, Ibi-gun, Gifu 5010695; (JP); OGYU, Kazutake;, ata, Ibigawa-cho, Ibi-gun, Gifu 5010695; (JP); HAYASHI, Masayuki;, ata, Ibigawa-cho, Ibi-gun, Gifu 5010695; (JP)
(74) Representative: Grünecker, Kinkeldey, Stockmair & Schwanhäusser Anwaltssozietät
(86) International application number: PCT/JP2005/012150
(87) International publication number: WO 2006/001509

(57) **Abstract**

A sintering aid for promoting sintering of silicon carbide (ceramic particles) and fine particles that are the same materials as silicon carbide and have smaller average particle diameter are mixed to obtain a puddle. The average particle diameter of ceramic particles is preferably 5 to 100 µm; the average particle diameter of the fine particles is preferably 0.1 to 1.0 µm, and the average particle diameter of the sintering aid is preferably 0.1 to 10 µm. As the sintering aid, alumina is used. This puddle is extrusion molded into a honeycomb shape and the molded object is fired at a firing temperature (1900 to 2100°C) lower than a temperature for sintering without mixing a sintering aid. The thermal conductivity of the obtained honeycomb structure 10 shows not less than 60% of the thermal conductivity of a fired body fired without adding a sintering aid to silicon carbide and shows 12 W/m·K or more at 20°C.

## Description

### TECHNICAL FIELD

The present invention relates to a method of manufacturing a porous product, a porous product and a honeycomb structure.

### BACKGROUND ART

Hitherto, as a method of manufacturing a honeycomb structure as a porous product, a method including a step of mixing ceramic particles such as silicon carbide and a sintering aid such as alumina to form a puddle; and a step of molding and firing this puddle has been proposed. For example, according to a manufacturing method described in JP-A 2002-234779, a sintering aid is melted to form a liquid phase at the time of firing, the melted component are precipitated and crystallized at neck portions of ceramic particles to bond ceramic particles to each other. As compared with a case where a sintering aid is not added, the sintering of ceramic particles is promoted by the sintering aid and a honeycomb structure can be obtained at a lower firing temperature.

### DISCLOSURE OF THE INVENTION

In general, a honeycomb structure may be used in, for example, converting or purifying exhaust gas. Therefore, it is preferable that the honeycomb structure reaches a reaction temperature rapidly and it is advantageous in terms of performance that the honeycomb structure has a high thermal conductivity. Furthermore, in general, it is preferable that a firing temperature of the honeycomb structure is low from the viewpoint of energy consumption.

However, according to the manufacturing method described in JP-A 2002-234779, although sintering of ceramic particles can be promoted by the sintering aid and the honeycomb structure can be obtained at a low firing temperature, the difference in the thermal conductivities between the ceramic particles and the sintering aid often lowered the thermal conductivity of the honeycomb structure.

The present invention was made with the foregoing problems in mind, and an object of the present invention is to provide a method of manufacturing a porous product capable of suppressing a reduction in the thermal conductivity and lowering a firing temperature. Another object of the present invention is to provide a porous product and a honeycomb structure having a sufficient thermal conductivity.

In order to achieve at least one of the above-mentioned objects, the present invention employs the following means.

The present invention is directed to a method of manufacturing a porous product. The invention includes a raw material mixing step that mixes ceramic particles having a predetermined average particle diameter, fine particles that are the same material as the ceramic particles and have an average particle diameter being smaller than the predetermined average particle diameter, and a sintering aid including at least one or more elements selected from the group consisting of a rare earth element, an alkaline earth element, Al and Si to form a puddle; and a molding and firing step that molds the puddle to obtain a molded object and fires the molded object at a firing temperature that is lower than a temperature for sintering without mixing the sintering aid.

This method of manufacturing a porous product mixes the ceramic particles, the sintering aid for promoting the sintering of the ceramic particles and the fine particles that are the same materials as the ceramic particles and have smaller average particle diameter, molds the mixture and fires the molded object at a firing temperature that is lower than a temperature for sintering without mixing the sintering aid. At this time, since the sintering of the ceramic particles is promoted by the sintering aid, the ceramic particles can be sintered at a temperature lower than the case where the ceramic particles are sintered without using the sintering aids. Furthermore, since fine particles that are the same material as the ceramic particles are present between the ceramic particles in a puddle before firing, even if this puddle is sintered at a low temperature by using the sintering aid, as compared with the case where ceramic particles are fired at a higher temperature without using the sintering aid, a reduction in the thermal conductivity can be suppressed.

In the method of manufacturing a porous product of the present invention, the predetermined average particle diameter of the ceramic particles is preferably in a range of 5 to 100 µm and more preferably in a range of 10 to 50 µm. It is thought that the average particle diameter of the ceramic particles of less than 5 µm is not preferable because the pore diameter becomes small and the pressure loss of exhaust gas may be high and that the average particle diameter of ceramic particles of more than 100 µm is not preferable because joining portions between particles are reduced, so that the strength may be reduced. Furthermore, the average particle diameter of the fine particles is preferably in a range of 0.1 to 10 µm and more preferably in a range of 0.1 to 5 µm. It is thought that the average particle diameter of the fine particles of less than 0.1 µm is not preferable because the fine particles are aggregated and poorly dispersed, which may cause uneven sintering and that the average particle diameter of the fine particles of more than 10 µm is not preferable because the fine particles are large and present in the bonding portions (neck portions) between the ceramic particles, which may deteriorate the strength.

The term "average particle diameter" herein denotes a value obtained by a laser diffraction scattering method using a Mastersizer Micro (MALVERN).

In the method of manufacturing a porous product of the present invention, the ceramic particles are not particularly limited, but the ceramic particles are, for example, one kind or two or more kinds of particles selected from silicon carbide, silicon nitride, alumina, silica, zirconia, titania, ceria and mullite. Among them, silicon carbide is preferable. Since silicon carbide has a high thermal conductivity and is often used for a porous product, it is significant to be applied to the present invention. At this time, it is preferable that the firing temperature is in a range of 1900 to 2100 °C. Silicon carbide is not easily sintered and needs to be sintered by firing at a high temperature (for example, 2200°C). In this manufacturing method, however, since the sintering aid is added, a sufficient strength can be obtained even when the firing temperature is in a range of 1900 to 2100°C.

In the method of manufacturing a porous product of the present invention, an element contained in the sintering aid may include rare earth elements such as Y, Er, Yb, La, Sc, Ce, Nd, Dy, Sm and Gd; an alkaline earth element such as Mg, Ca, Ba and Sr; and other elements such as Al, Si and B. Among these elements, it is preferable that Al is contained in the sintering aid. Furthermore, an example of elements contained in the sintering aid may include an alkaline metal such as Na, K and Li.

The present invention is also directed to a porous product that includes ceramic particles, and one or more elements selected from the group consisting of a rare earth element, an alkaline earth element, Al and Si. Where the ceramic particles are bound to each other at a neck portion mainly formed of the same materials as the ceramic particles.

This porous product includes ceramic particles and the above-mentioned elements, and the ceramic particles are bonded to each other at the neck portion mainly formed of the same materials as the ceramic particles. In this way, since the neck portion for bonding the ceramic particles to each other is linked by the same materials as the ceramic particles, the sufficient thermal conductivity is exhibited even if the above-mentioned elements are contained. At this time, on the surface of the neck portion, one or more elements selected from the group consisting of a rare earth element, an alkaline earth element, Al and Si may be present. It is thought that such elements, which are present on the surface of the neck portion to which stress is applied, releave the stress to improve the strength of the porous product. The porous product of the present invention may show the thermal conductivity that is 60% or more, and particularly 80% or more of the thermal conductivity of a fired body fired without adding a sintering aid to the ceramic particles.

The present invention is also directed to a porous product that includes ceramic particles, and one or more elements selected from the group consisting of a rare earth element, an alkaline earth element, Al and Si. The porous product shows the thermal conductivity that is 60% or more of the thermal conductivity of a fired body fired without adding a sintering aid to the ceramic particles.

This porous product shows the thermal conductivity that is 60% or more and particularly 80% or more of the thermal conductivity of a fired body fired without adding a sintering aid even if the thermal conductivity of the ceramic particles is different from that of the materials containing the above-mentioned elements.

It is preferable in the porous product of the present invention that the thermal conductivity at 20°C is 12W/m·K or more. When the thermal conductivity at 20°C is 12W/m·K or more, the conductivity of heat is good and desirable temperature can be rapidly obtained.

In the porous product of the present invention, the ceramic particles are not particularly limited, but the ceramic particles are, for example, one kind or two or more kinds of particles selected from silicon carbide, silicon nitride, alumina, silica, zirconia, titania, ceria and mullite. Among them, silicon carbide is preferable. Since silicon carbide has a high thermal conductivity and is often used for a porous product, it is significant to apply the present invention to a porous product using silicon carbide.

In the porous product of the present invention, the elements contained in the porous product may be one or more elements selected from the group consisting of a rare earth element, an alkaline earth element, Al and Si. Among these elements, Al is preferable. It is advantageous because Al may be added to the porous product as alumina and the alumina is sometimes used for a sintering aid to promote the sintering of ceramic particles.

The honeycomb structure of the present invention includes the porous product in any of the above-mentioned various embodiments. Since the porous product of the present invention has a sufficient thermal conductivity, the honeycomb structure manufactured by this porous product also has the same effect.

### BRIEF DESCRIPTION OF THE DRAWINGS

Fig. 1 illustrates a honeycomb structure 10 according to an exemplary embodiment of the present invention.
Fig. 2 illustrates a honeycomb structure 20 according to an exemplary embodiment of the present invention.
Fig. 3 illustrates a honeycomb structure 30 according to an exemplary embodiment of the present invention.
Fig. 4 show SEM photographs of the honeycomb structure 10 according to an exemplary embodiment of the present invention.

### DETAILED DESCRIPTION OF THE PREFERRED EMBODIMENTS

Hereinafter, best modes for carrying out the present invention will be described.

Firstly, a method of manufacturing a porous product of the present invention will be described in detail by step. The following is a description of a method of manufacturing a honeycomb structure as a porous product by using silicon carbide as ceramic particles (hereinafter referred to as "coarse grain silicon carbide'), silicon carbide as fine particles (hereinafter referred to as "fine grain silicon carbide") that are the same materials as the ceramic particles and have an average particle diameter smaller than that of the ceramic particles, and alumina as a sintering aid. Specifically, a method of manufacturing a honeycomb structure used as a diesel particulate filter (hereinafter, referred to as "DPF") having functions of filtering, firing and purifying particulate materials (hereinafter, referred to as "PM") in exhaust gas of diesel engine is shown as an example.

### (1) Raw Material Mixing Step

Raw materials for a honeycomb structure to be used include coarse grain silicon carbide, fine grain silicon carbide and alumina. The average particle diameter of the coarse grain silicon carbide to be used is in a range of 10 to 100 µm (preferably in a range of 30 to 40 µm). The average particle diameter of the fine grain silicon carbide to be used is in a range of 0.1 to 1.0 µm (preferably 0.5 µm). The average particle diameter of the alumina to be used is preferably in a range of 0.1 to 1.0 µm. Herein, alumina having the average particle diameter of 0.5 µm is used. Alumina is excellent in stability at high temperature, has a high function as a sintering aid, and can promote sintering of silicon carbide. As the mixing ratio of the raw materials, with respect to the total amount of coarse grain silicon carbide, fine grain silicon carbide and alumina, the amount of coarse grain silicon carbide is preferably 50 to 70% by weight, the amount of fine grain silicon carbide is preferably 20 to 35% by weight (more preferably 25 to 30% by weight), and the amount of alumina is preferably 1 to 30% by weight (more preferably 3 to 7% by weight). The amount of coarse grain silicon carbide of less than 50% by weight is not preferable because the amount of fine grain silicon carbide and/or alumina is relatively increased so as to decrease the pore diameter of a honeycomb filter. The amount of coarse grain silicon carbide of more than 70% by weight is not preferable because the amount of fine grain silicon carbide and/or alumina is relatively decreased so as to weaken the strength of a honeycomb structure. Furthermore, the amount of fine grain silicon carbide of less than 20% by weight is not preferable because materials for forming binding portions (neck portions) of particles of coarse grain silicon carbide are decreased so as to lower the thermal conductivity or thermal shock resistance. The amount of fine grain silicon carbide of more than 35% by weight is not preferable because the pore diameter of a honeycomb filter becomes small. Furthermore, the amount of alumina of less than 1% by weight is not preferable because an alumina component is not easily present on the surface. The amount of alumina of more than 30% by weight is not preferable because too much aluminium components are present in the neck portions so as to lower the thermal conductivity or thermal shock resistance.

Then, to 100 parts by weight of the above-mentioned mixture of coarse grain silicon carbide, fine grain silicon carbide and alumina, 10 to 30 parts by weight of water is added and wet blending is carried out to give a puddle. Dispersion medium may include, for example, an organic solvent (such as benzene) and alcohol (such as methanol), and the like, besides water. Besides these components, an organic binder or a molding aid can be appropriately added to this puddle in accordance with the molding property. Examples of the organic binder include one kind or two or more kinds of organic binders selected from methyl cellulose, carboxymethyl cellulose, hydroxyethyl cellulose, polyethylene glycol, phenol resin and epoxy resin. The mixing amount of the organic binder is preferably 1 to 10 parts by weight with respect to 100 parts by weight of total of coarse grain silicon carbide, fine grain silicon carbide and alumina. Examples of the molding aid may include ethylene glycol, dextrin, fatty acid soap and polyalcohol. This puddle may be mixed by using, for example, mixer, attritor, and the like, or may be sufficiently kneaded by using a kneader.

### (2) Molding and Firing Step

Then, the puddle containing coarse grain silicon carbide, fine grain silicon carbide and alumina obtained in the raw material mixing step is molded in a honeycomb form. Molding a puddle can be carried out by extrusion molding, casting, press molding, and the like. Herein, extrusion molding is employed. Herein, since the above-mentioned puddle contains fine grain silicon carbide, molding is carried out in a state in which this fine grain silicon carbide is included between the particles of coarse grain silicon carbide. Shapes of the honeycomb structure to be molded may be appropriately selected in accordance with the application of use, etc., and any shapes and sizes can be selected. For example, the honeycomb structure may be shaped in a cylindrical shape, a square-pillar shape, or an elliptic cylindrical shape. Herein, the puddle is molded into a square-pillar shape having a plurality of through holes arranged in parallel along a longitudinal direction. The size of through hole or the number of through holes, or wall thickness between the through holes may be appropriately selected in accordance with the purposes of intended use. The sectional shape of the through hole may be rectangle or triangle or hexagon. The obtained raw molded object is dried, and then one end of each of the plurality of through holes is sealed with a paste having the same composition as that of the puddle. Specifically, a plurality of through holes are provided so that a through hole one end of which is sealed with a paste and another end of which is open and a through hole one end of which is open and another end of which is sealed with a paste are arranged alternately.

Subsequently, the obtained raw molded object is dried and fired. The drying is carried out at a temperature of about 100 to 200°C with a microwave dryer, a hot air dryer, or the like. When organic components such as an organic binder are added in the raw material mixing step, it is preferable that pre-firing is carried out before firing for degreasing this organic component. The pre-firing condition is appropriately determined depending upon the amount or kinds of the added organic components, but the pre-firing is carried out by, for example, heating at a temperature of about 300 to 650°C in an atmosphere of oxygen. Firing is carried out at a temperature of about 1900 to 2100°C in an inert gas atmosphere of nitrogen, argon, and the like. Herein, since alumina is used as the sintering aid, as compared with the case where the sintering aid is not added, the firing temperature can be lowered by about 100 to 300°C. Since fine grain silicon carbide is added and is present between particles of coarse grain silicon carbide, even when this puddle is sintered at a low temperature by using a sintering aid, as compared with the case where the ceramic particles are fired at a high temperature without using a sintering aid, a reduction in the thermal conductivity can be suppressed. Thus, the honeycomb structure in accordance with the exemplary embodiment can be obtained. Herein, a method of manufacturing for molding into a honeycomb structure was described. However, any porous products having an arbitrary size and an arbitrary shape (for example, plate shape, disk shape, cylindrical shape, square-pillar shape, or elliptic cylinder) may be molded.

The honeycomb structure obtained by this manufacturing method includes silicon carbide, Al element derived from alumina that is a sintering aid. The honeycomb structure shows the thermal conductivity that is 60% or more (preferably, 80% or more) of that of a fired body fired without adding a sintering aid to silicon carbide. The thermal conductivity at 20°C is 12 W/m·K or more (preferably, 16 W/m·K or more). The reason why the thermal conductivity is not largely reduced is thought to be in the following points. It is estimated that in a raw molded object before sintering, since fine grain silicon carbide enters between particles of coarse grain silicon carbide, neck portions, which are formed at the time of firing and in which the particles of coarse grain silicon carbide are bonded to each other, are mainly formed of silicon carbide. When fine particles are not mixed in the puddle before firing, alumina as the sintering aid enters between the particles of silicon carbide as the ceramic particles, so that the neck portions for bonding particles to each other are not linked by silicon carbide but separated by alumina. Since the thermal conductivity of alumina is lower than that of silicon carbide, the thermal conductivity of the neck portion separated by alumina is reduced depending upon the thermal conductivity of alumina, thus reducing the thermal conductivity between particles of silicon carbide. When a plurality of neck portions separated by alumina are formed in this way, the thermal conductivity of the porous product is lowered accordingly. On the contrary, it is estimated that when fine particles of silicon carbide are mixed in the puddle before firing, the fine particles enter between the particles of silicon carbide and the neck portions for bonding particles to each other are mainly formed of silicon carbide, so that the effect of the thermal conductivity of alumina can be lowered. As a result, it is thought that reduction in the thermal conductivity of the honeycomb structure can be suppressed. It is thought that a porous product produced by this manufacturing method shows a sufficient thermal conductivity from the above-mentioned reason.

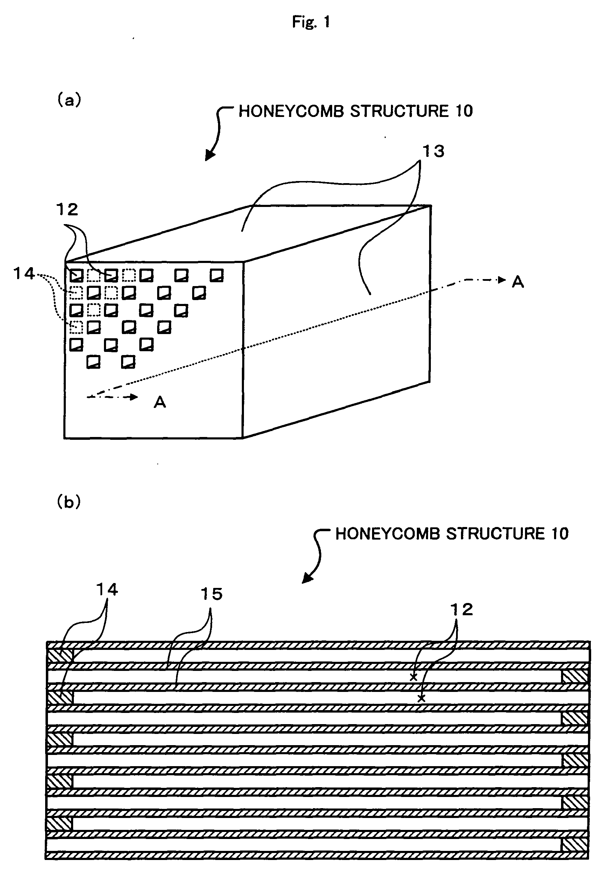

Next, a honeycomb structure 10 obtained by this manufacturing method is described. Fig. 1(a) illustrates the honeycomb structure 10; and Fig. 1(b) shows a cross-sectional view taken along line A-A of Fig. 1(a). In this honeycomb structure 10, alternate end faces of a plurality of through holes 12 arranged in parallel along the longitudinal direction of the honeycomb structure 10 are sealed with sealing portions 14. Therefore, in this honeycomb structure 10, exhaust gas flowing from the entrance of the through holes 12 moves to the neighboring through holes 12 by passing through wall portions 15. At this time, PMs contained in the exhaust gas are trapped by the wall portions 15 of the honeycomb structure 10.

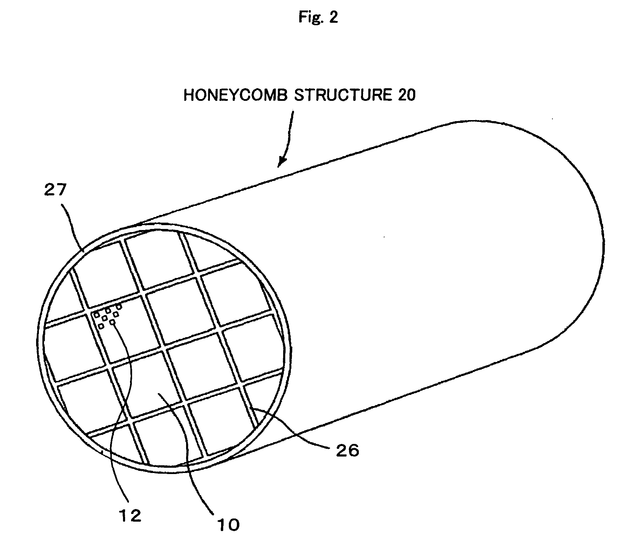

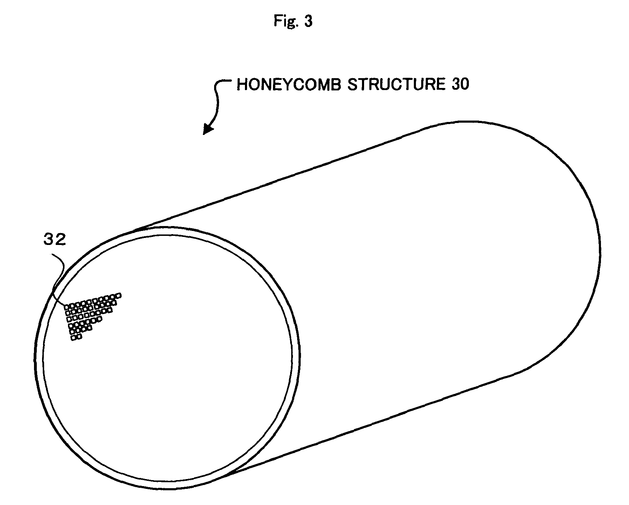

Herein, in the manufacturing method in accordance with the exemplary embodiment, the method of manufacturing a square-pillar-shaped DPF was described. However, a catalyst carrier for converting or purifying exhaust gas of engine (so-called three-way catalyst) may be formed without forming sealing portions 14. As shown in Fig. 2, a honeycomb structure 20 may be produced by joining a plurality of the honeycomb structures 10 and processing the joined product into a cylindrical shape. This honeycomb structure 20 is obtained by the following procedure. The procedure produces a plurality of the honeycomb structures 10, joins the honeycomb structures 10 with a sealing material layers 26 obtained by applying a sealing paste on an outer surface 13 of the honeycomb structure 10 to be dried and solidified, cuts the joined product with a diamond cutter and the like into a cylindrical shape, covers an outer circumferential surface on which the through holes 12 are not open with a coating material layer 27 that is formed of a similar paste to the sealing paste, and dries and solidifies thereof. Herein, the sealing paste containing at least one of inorganic fiber and inorganic particles and appropriately supplemented with inorganic binder or organic binder can be used. Examples of the inorganic fiber may include one or more ceramic fibers selected from silica-alumina, mullite, alumina, silica, and the like. Examples of the inorganic particles may include one or more particles selected from silicon carbide, silicon nitride, boron nitride, and the like. Examples of the inorganic binder may include one or more binders selected from silica sol, alumina sol, and the like. Examples of the organic binder may include one or more organic binders selected from polyvinyl alcohol, methyl cellulose, ethyl cellulose, carboxymethyl cellulose, and the like. Also as shown in Fig. 3, a honeycomb structure 30 having through holes 32 may be integrally molded, or an integrated DPF may be manufactured by providing alternate end faces of through holes 32 of this honeycomb structure 30 with sealing portions 34.

In the honeycomb structure 10 and the porous product mentioned above, it was estimated that the neck portions for bonding particles of silicon carbide are mainly formed of silicon carbide. Even if the neck portions are not so formed, however, according to the method for manufacturing a porous product and a honeycomb structure of the present invention, the thermal conductivity is 60% or more of that of a fired body fired without adding a sintering aid to silicon carbide and the thermal conductivity at 20°C is 12 W/m·K or more. Therefore, a reduction in the thermal conductivity can be suppressed so as to lower the firing temperature. Furthermore, the porous product and honeycomb structure obtained by this manufacturing method can have a sufficient thermal conductivity.

According to the exemplary embodiment described in detail, since the sintering of ceramic particles is promoted by a sintering aid at the time of manufacturing the honeycomb structure, as compared with the case where the ceramic particles are sintered without using a sintering aid, the ceramic particles can be sintered at a lower temperature. Furthermore, since the puddle before firing contains fine particles that are the same materials as the ceramic particles between the ceramic particles, even if this puddle is sintered by using a sintering aid at a low temperature, as compared with the case where the ceramic particles are fired at a higher temperature without using a sintering aid, a reduction in the thermal conductivity can be suppressed.

Furthermore, in the honeycomb structure 10 of the exemplary embodiment, since the neck portions for bonding the ceramic particles are mainly formed of the same materials as the ceramic particles, the thermal conductivity of the honeycomb structure 10 is not lowered. Even if the honeycomb structure 10 contains Al element, the honeycomb structure 10 has a sufficient thermal conductivity. The honeycomb structure 10 shows the thermal conductivity that is 60% or more of that of a fired body fired without adding a sintering aid to ceramic particles. Since the thermal conductivity at 20°C of 12 W/m·K or more, the conductivity of heat is good and a desirable temperature can be obtained rapidly.

Needless to say, the present invention is not limited to the above-mentioned exemplary embodiments but various embodiments within the scope of the technical field of the present invention can be carried out.

### Examples

Hereinafter, examples of specifically manufacturing a honeycomb structure 10 will be described as examples.

### [Example 1]

The procedure firstly mixed 6750 parts by weight of α-silicon carbide powder (average particle diameter: 40 µm) as ceramic particles; 2950 parts by weight of α-silicon carbide powder (average particle diameter: 0.5 µm) as fine particles; 300 parts by weight of γ-alumina (average particle diameter: 0.5 µm) as a sintering aid; and 1800 parts by weight of water to give a mixture. The procedure further added 600 parts by weight of methyl cellulose as an organic binder, 150 parts by weight of glycerin as a plasticizer, and 330 parts by weight of lubricant (trade name: UNILUB, NOF Corporation) to the mixture and kneaded the whole mixed composition to form a puddle. This puddle was extrusion molded by an extruder into a square-pillar-shaped raw molded object provided with a plurality of through holes arranged in parallel along the longitudinal direction thereof. The obtained raw molded object was then dried with a microwave dryer. Alternate end faces of the plurality of through holes arranged in parallel along the longitudinal direction of the molded object were sealed with a paste formed of composition similar to the above-mentioned puddle. The molded object was further dried and degreased at 400°C for 3 hours. This degreased molded object was fired at 2000°C at ordinary pressure under an argon atmosphere for 3 hours to form a honeycomb structure 10 formed of sintered silicon carbide as shown in Fig. 1(a). The honeycomb structure 10 has a size of 34.3 mm x 34.3 mm x 150 mm, 31 holes/cm² (200 cpsi) of through holes, and 0.3 mm-thick partition walls. Values etc. with respect to the raw materials of the honeycomb structure of Example 1, that is, the average particle diameters of coarse grain silicon carbide, fine grain silicon carbide and alumina, the mixing ratios of coarse grains, fine grains and alumina, and firing temperatures are shows in Table 1. Each mixing ratio of coarse silicon carbide, fine silicon carbide and alumina are shown by weight % with respect to the whole composition. Table 1 also shows the contents regarding Examples 2 to 9 mentioned below, and the measurement results of the below-mentioned thermal conductivity, three-point bending strength and average pore diameter.

**Table 1**

| Sample | Coarse Grain Particle Diameter | Fine Grain Particle Diameter | Alumina Particle Diameter | Coarse Grain Mixing Ratio | Fine Grain Mixing Ratio | Alumina Mixing Ratio | Firing Temperature | Thermal Conductivity | Three-point Bending Strength | Average Pore Diameter |
|---|---|---|---|---|---|---|---|---|---|---|
| | µm | µm | µm | % by weight | % by weight | % by weight | °C | W/mK | MPa | µm |
| Example 1 | 40 | 0.5 | 0.5 | 67.5 | 29.5 | 3.0 | 2000 | 17.6 | 23.6 | 25.9 |
| Example 2 | 40 | 0.5 | 0.5 | 66.5 | 28.5 | 5.0 | 2000 | 17.5 | 26.7 | 26.2 |
| Example 3 | 40 | 0.5 | 0.5 | 65.5 | 27.5 | 7.0 | 2000 | 17.3 | 25.3 | 25.4 |
| Example 4 | 30 | 0.5 | 0.5 | 66.5 | 28.5 | 5.0 | 2000 | 17.5 | 26.1 | 23.5 |
| Example 5 | 30 | 0.5 | 0.5 | 65.5 | 27.5 | 7.0 | 2000 | 17.7 | 26.3 | 23.9 |
| Example 6 | 40 | 0.5 | 0.5 | 68.5 | 30.5 | 1.0 | 2000 | 18.7 | 9.1 | 25.3 |
| Example 7 | 40 | 0.5 | 0.5 | 66.5 | 28.5 | 5.0 | 1600 | 16.2 | 7.8 | 23.4 |
| Example 8 | 40 | 0.5 | - | 70.0 | 30.0 | - | 2000 | 20.1 | 7.1 | 25.8 |
| Example 9 | 40 | - | 0.5 | 95.0 | - | 5.0 | 2000 | 10.2 | 8.4 | 26.1 |

| | | | | | | | | | | |
|---|---|---|---|---|---|---|---|---|---|---|
| 1) Coarse Grain : Ceramic Particle : Silicon Carbide | | | | | | | | | | |
| 2) Fine Grain : Fine Particle : Silicon Carbide | | | | | | | | | | |

### [Examples 2 to 9]

Honeycomb structures were produced from the same procedure as in Example 1 except for designing honeycomb structures to have mixing ratios and firing temperatures shown in Table 1. In Example 7, the mixing ratio was the same as in Example 2 and the firing temperature was 1600°C; in Example 8, alumina as a sintering aid was not added; and in Example 9, fine particles of silicon carbide were not added.

### [SEM Observation]

SEM observation of Example 2 was carried out. For SEM, S-4300 (HITACHI) was used. Herein, a cross-section obtained by slicing the honeycomb structure was observed without carrying out the sputtering coat. Furthermore, a honeycomb structure obtained by firing materials having a mixing ratio shown in Example 8 at 2200° C (Example 10) was also subjected to SEM observation. This Example 10 is an ordinary product obtained by sintering without adding a sintering aid.

### [Measurement of Thermal Conductivity]

Thermal conductivities of Examples 1 to 9 were measured. This measurement was carried out at 20°C by a laser flash method based on JIS-R1611. As a reference example, when the thermal conductivity of a commercially available cordierite was measured, the result was 2.0 W/m·K.

### [Three-point Bending Strength]

Three-point bending strength of Examples 1 to 9 were measured. This measurement was carried out by using a measuring instrument (5582, by Instron) based on JIS-R1601. Specifically, crosshead speed was set to 0.5 mm/min and distance between spans to 125 mm. Breaking load was measured by applying load vertically with respect to the through holes 12 of the square-pillar-shaped honeycomb filter 10 shown in Fig. 1(a) and geometrical moment of inertia was calculated from the wall thickness and structure of the honeycomb to calculate the strength.

### [Measurement of Average Pore Diameter]

Average pore diameters of Examples 1 to 9 were measured. This measurement was carried out by a mercury press-in method with automated porocimeter Auto Pore III 9405 (Shimadzu) based on JIS-R1655. Specifically, the procedure cut the honeycomb filter 10 into a cube of about 0.8 cm, carried out ultrasonic cleansing with ion exchanged water and dried. Then, the measurement was carried out with the above-mentioned measuring instrument in a measurement range of 0.2 to 500 µm. The measurement was carried out every 0.1 psia of pressure in a range of 100 to 500 µm and every 0.25 psia of pressure in a range of 0.2 to 100 µm.

### [Results]

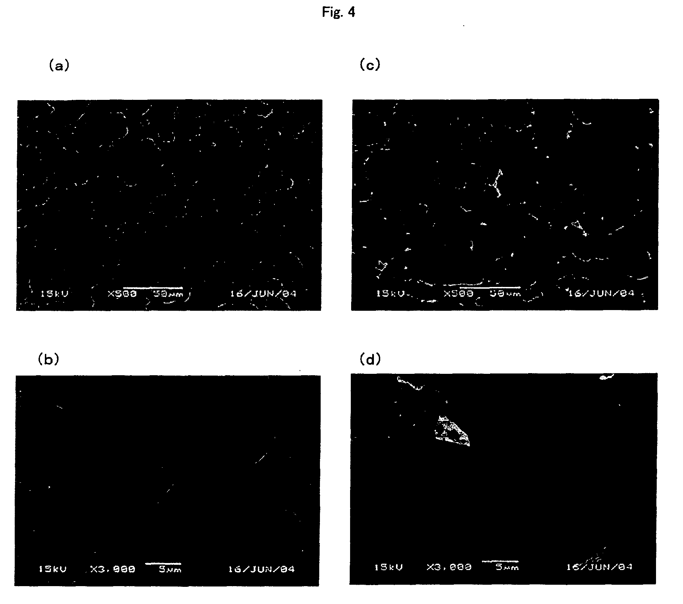

Figs. 4(a) and (b) show photographs of SEM observation of Example 10 at magnification of x500 and x3000, respectively. Figs. 4(c) and (d) show photographs of SEM observation of Example 2 at magnification of x500 and x3000, respectively. Figs. 4 (a) and 4(c) showed that silicon carbides as ceramic particles are bonded to each other at the neck portions. Furthermore, it was shown that the structure of the neck portion of a fired object fired at 2000°C with adding alumina and the structure of the neck portion of a fired object fired at 2200°C without adding alumina are substantially the same. Therefore, it showed that the components were sufficiently sintered at a lower temperature by the addition of alumina. Furthermore, as shown in Fig. 4(d), it was estimated that silicon carbides as ceramic particles were linked at the neck portions mainly formed of silicon carbide. Precipitates on the surface of the neck portion of Example 2 seemed to be alumina. It was thought that since this alumina existing on the surface of this neck portion relaxed the stress applied to the neck portion of the alumina, the strength of the honeycomb structure 10 was improved.

Each measurement result of the thermal conductivity, three-point bending strength and average pore diameter of Examples 1 to 9 are shown in Table 1. As is apparent from Table 1, the thermal conductivities of Examples 1 to 7 showed 60% or more with respect to the thermal conductivity of Example 8 in which no alumina was added. Therefore, in these Examples 1 to 7, alumina was added, but it was estimated that silicon carbides as ceramic particles were linked at the neck portions mainly formed of silicon carbide. Observation results of SEM photographs also support these results. Furthermore, Example s 6 to 9 showed that three-point bending strength was low and that sintering was not sufficient. On the contrary, Examples 1 to 5 obtained the strength of more than 20 MPa, showing that sintering was sufficient. Consequently, it was found that the method of mixing silicon carbides as ceramic particles, silicon carbides as fine particles and alumina as a sintering aid to form a mixture, and molding and sintering the mixture enabled the reduction in the strength and the thermal conductivity to be suppressed and the firing temperature to be lowered. Furthermore, it was shown that the honeycomb structure manufactured by this manufacturing method showed the thermal conductivity at 20°C of 12 W/m-K or more and showed the thermal conductivity that was 60% or more with respect to the case where a sintering aid was not added to ceramic particles. Thus, it was shown that a honeycomb structure had a sufficient thermal conductivity.

The present invention claims benefit of priority to Japanese Patent Application No. 2004-188856, filed on June 25, 2004, the contents of which is incorporated by reference herein in their entirety.

### INDUSTRIAL APPLICABILITY

The porous product and the honeycomb structure of the present invention can be used for situations, for example, requiring filtration in various industries. Specifically, it can be used as a system for purifying exhaust gas in the automobile industry or a system for purifying water in the water industry.

## Claims

1. A method of manufacturing a porous product, the method comprising:
a raw material mixing step that mixes ceramic particles having a predetermined average particle diameter, fine particles that are the same material as the ceramic particles and have an average particle diameter being smaller than the predetermined average particle diameter, and a sintering aid including one or more elements selected from the group consisting of a rare earth element, an alkaline earth element, Al and Si to form a puddle; and
a molding and firing step that molds the puddle to obtain a molded object and fires the molded object at a firing temperature that is lower than a temperature for sintering without mixing the sintering aid.

2. The method of manufacturing a porous product according to claim 1, wherein the predetermined average particle diameter is in a range of 5 to 100 µm.

3. The method of manufacturing a porous product according to either one of claims 1 and 2, wherein the fine particles have an average particle diameter in a range of 0.1 to 10 µm.

4. The method of manufacturing a porous product according to any one of claims 1 to 3, wherein the ceramic particles are silicon carbide.

5. The method of manufacturing a porous product according to claim 4, wherein a firing temperature in the molding and firing step is in a range of 1900 to 2100° C.

6. The method of manufacturing a porous product according to any one of claims 1 to 5, wherein the sintering aid is alumina.

7. A porous product comprising:
ceramic particles; and
one or more elements selected from the group consisting of a rare earth element, an alkaline earth element, Al and Si;
wherein the ceramic particles are bound to each other at a neck portion mainly formed of the same materials as the ceramic particles.

8. The porous product according to claim 7, comprising the one or more elements selected from the group consisting of a rare earth element, an alkaline earth element, Al and Si are present on a surface of the neck portion.

9. The porous product according to either one of claims 7 and 8, which shows a thermal conductivity that is 60% or more of a thermal conductivity of a fired body fired without adding a sintering aid to the ceramic particles.

10. A porous product comprising:
ceramic particles; and
one or more elements selected from the group consisting of a rare earth element, an alkaline earth element, Al and Si;
which shows a thermal conductivity that is not 60% or more of a thermal conductivity of a fired body fired without adding a sintering aid to the ceramic particles.

11. The porous product according to any one of claims 7 to 10, wherein a thermal conductivity at 20°C is 12 W/m·K or more.

12. The porous product according to any one of claims 7 to 11, wherein the ceramic particles are silicon carbide.

13. The porous product according to any one of claims 7 to 12, wherein the element is Al.

14. A honeycomb structure comprising the porous product according to any one of claims 7 to 13.
